# EUROPEAN PATENT APPLICATION

(11) **EP 2 706 244 A1**
(43) Date of publication of application: **12.03.2014**
(21) Application number: 12183324.8
(22) Date of filing: 06.09.2012
(51) Int. Cl.: F16B 5/02, F16B 43/02, F16B 39/282

(54) **A concrete bolt assembly**

(71) Applicant: Yow Cheng Co., Ltd., Alian Township Kao hsiung 822 (TW)
(72) Inventor: Hsu, Tai-Ping, Kaohsiung County 822 (TW)
(74) Representative: Chaillot, Geneviève

(57) **Abstract**

A concrete bolt assembly (3) comprises a bolt set (30) and a spherical washer (31) for the bolt set (30) to penetrate. The bolt set (30) includes a concrete bolt member (32) and a spherical nut (33) disposed on the concrete bolt member (32). The spherical nut (33) has a first sphere (334A) and the spherical washer (31) has a second sphere (312A). With the arrangement of the first sphere (334A) and the second sphere (312A), the concrete bolt assembly (3) can be embedded in a building material (2) from any inclined angle since the contact of the spherical nut (33) and the spherical washer (31) exerts a perpendicular force to densely tighten the concrete bolt assembly (3), prevent the embedded concrete bolt assembly (3) from easily coming off or extracting from the building material (2) after screwing, and enhance an engaging effect of the assembly.

## Description

### BACKGROUND OF THE INVENTION

### 1. Field of the Invention

The present invention relates to a concrete bolt, particularly to a concrete bolt assembly comprising a spherical washer and a spherical nut.

### 2. Description of the Related Art

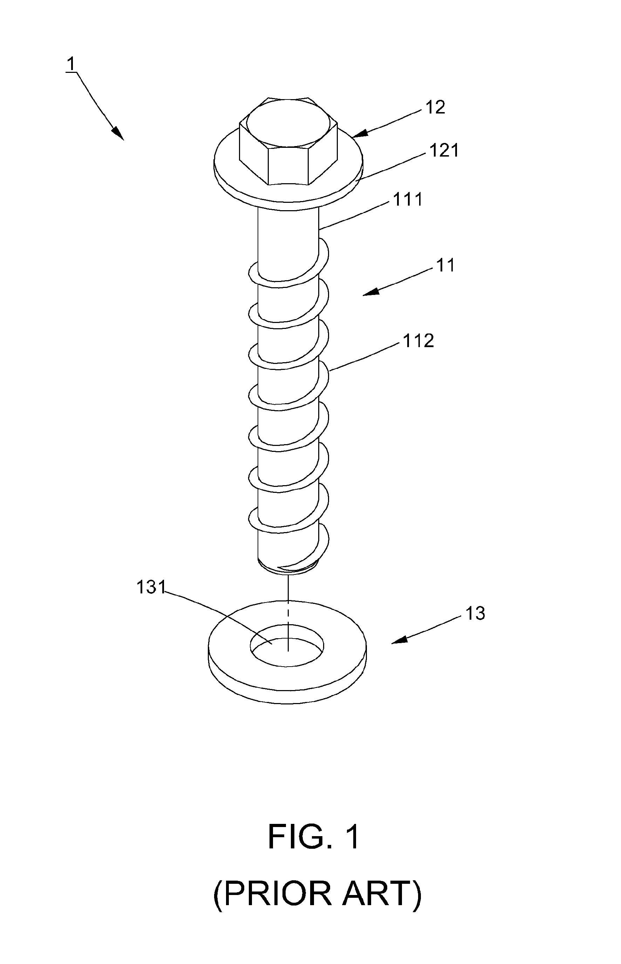

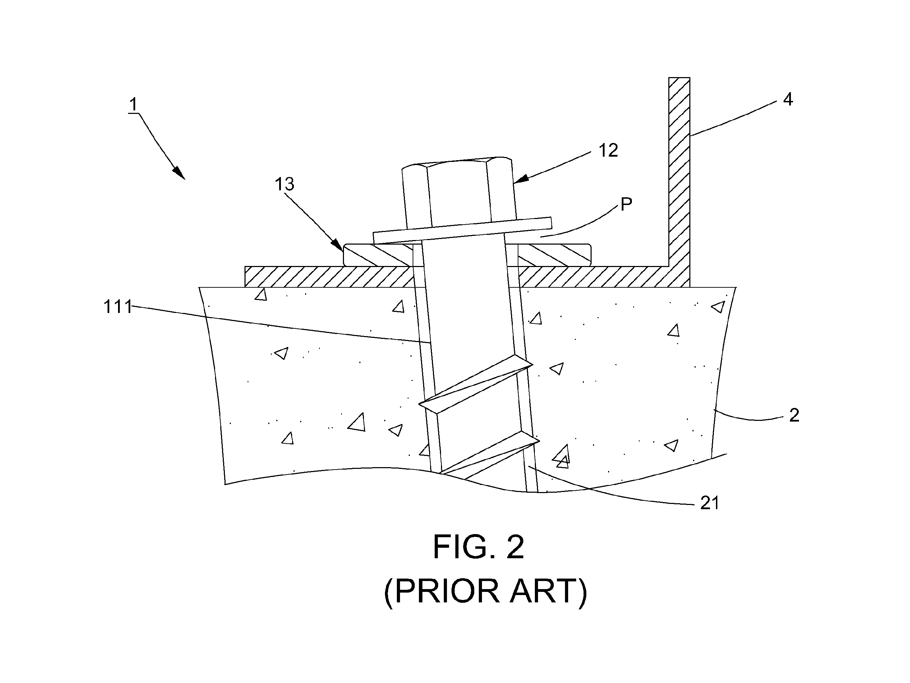

Referring to Figs. **1** and **2****,** a conventional concrete bolt assembly **1** comprises a concrete bolt member **11,** a nut **12** disposed on the concrete bolt member **11,** and a washer **13** disposed under the nut **12.** Wherein, the concrete bolt member **11** includes a shank **111,** and a threaded section **112** disposed around the shank **111.** Herein, the nut **12** is a hexagonal formation and has a flat plane **121.** Further, the washer **13** defines an opening **131** for the concrete bolt member **11** to penetrate.

Accompanying with Fig. **2****,** the concrete bolt assembly **1** is utilized to fix an object **4** into a building material **2** (such as concrete). In screwing, a predrilled hole **21** is defined on a proper position of the concrete **2.** Accordingly, when the shank **111** of the concrete bolt member **11** penetrates the washer **13** and enters the predrilled hole **21,** a wrench (not shown) is exerted to screw the concrete bolt assembly **1.** When the nut **12** touches the washer **13,** the concrete bolt member **11** starts to be firmly engaged in the predrilled hole **21,** so that the object **4** is fixed to the concrete **2.**

However, there are shortcomings existing in the conventional concrete bolt assembly **1:**
1. When the concrete bolt member **11,** the flat plane **121** of the nut **12,** and the washer **13** contact with each other in a planar way, there is no room for the concrete bolt member **11** to be freely adjusted. Namely, if the concrete bolt member **11** is screwed askew, an interstice **P** is adversely occurred among the concrete bolt member **11,** the nut **12,** and the washer **13,** or between the washer **13** and the object **4.** As a result, foreign substances or moisture may get into the interstice **P,** which easily corrodes the concrete bolt assembly **1** and reduces using life thereof.
2. If the concrete bolt assembly **1** is improperly struck or screwed askew in order to be fastened more firmly, the predrilled hole **21** may be broken, and the structure as well as the strength of the concrete **2** may be destroyed. Consequently, the concrete bolt assembly **1** provides a poor fastening effect, which needs amendments.
3. The planar structures of the nut **12** and the washer **13** are easily vibrated by accidental external influence. Subsequently, the concrete bolt member **11** and the nut **12** are influenced and they may easily retract out of the predrilled hole **21.**

### SUMMARY OF THE INVENTION

The object of the present invention is to provide a concrete bolt assembly that can be firmly fastened by an advanced engaging force.

The concrete bolt assembly in accordance with the present invention comprises a bolt set and a spherical washer disposed on the bolt set. The bolt set includes a concrete bolt member and a spherical nut disposed on the concrete bolt member. Wherein, the concrete bolt member has a shank, and a first threaded section disposed on the shank, opposite to the spherical nut. The spherical nut has a head portion formed with respect to a central axis, a first top plane formed on the head portion, and a first bottom plane formed opposite to the first top plane. The first bottom plane is formed into a first sphere configuration, and a center of the first sphere is situated on the central axis. In addition, the spherical washer has a washer body, a second top plane formed on the washer body, and a second bottom plane disposed opposite to the second top plane. Wherein, an opening is defined on the washer body for the shank of the concrete bolt member to penetrate. A second sphere, corresponding to the first sphere, is formed on the second top plane, and a center of the second sphere is situated on the central axis.

Preferably, the concrete bolt member and the spherical nut are separated; on the shank of the concrete bole member, a neck is formed opposite to the first threaded section, a polygonal section is disposed above the neck, and a second threaded section is surrounded between the first threaded section and the neck; the spherical nut defines a threaded hole around the center of the first sphere for coupling to the second threaded section.

Preferably, the polygonal section is a hexagonal section.

Preferably, a pitch of the first threaded section is larger than a pitch of the second threaded section.

Preferably, a plurality of slots are defined on the second bottom plane of the spherical washer, so that a periphery of the second bottom plane is indented by forming a plurality of teeth units thereon.

Preferably, a radian of the first sphere of the spherical nut and a radian of the second sphere of the spherical washer are different.

Accordingly, the spherical nut and the spherical washer are able to firmly contact with each other in any engaging angle during screwing the concrete bolt assembly. Namely, no interstice is incurred, and the concrete bolt assembly stably fastens an object by means of a perpendicular screwing force. Favorably, the engaging angle does not influence the fastened state and the structure strength of the object. Thereby, the concrete bolt assembly achieves a firm fastening effect.

### BRIEF DESCRIPTION OF THE DRAWINGS

- Fig. **1**: is a schematic view showing a conventional concrete bolt assembly;
- Fig. **2**: is a schematic view showing the conventional concrete bolt assembly in operation;
- Fig. **3**: is a schematic view showing a first preferred embodiment of the present invention;
- Fig. **4**: is a schematic view showing the first preferred embodiment of the present invention in operation;
- Fig. **5**: is a schematic view showing a second preferred embodiment of the present invention;
- Fig. **6**: is a schematic view showing the second preferred embodiment of the present invention in operation;
- Fig. **7**: is another schematic view showing the second preferred embodiment of the present invention in operation;
- Fig. **8**: is a schematic view showing the second preferred embodiment of the present invention in screwing; and
- Fig. **9**: is a schematic view showing a third preferred embodiment of the present invention.

### DETAILED DESCRIPTION OF THE PREFERRED EMBODIMENTS

Before the present invention is described in greater detail, it should be noted that the like elements are denoted by the same reference numerals throughout the disclosure.

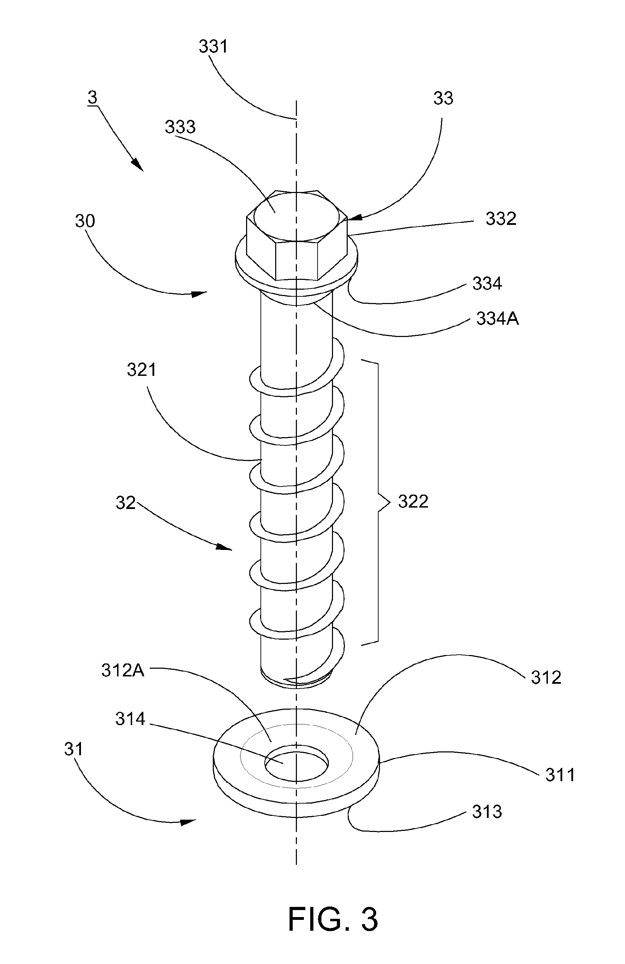

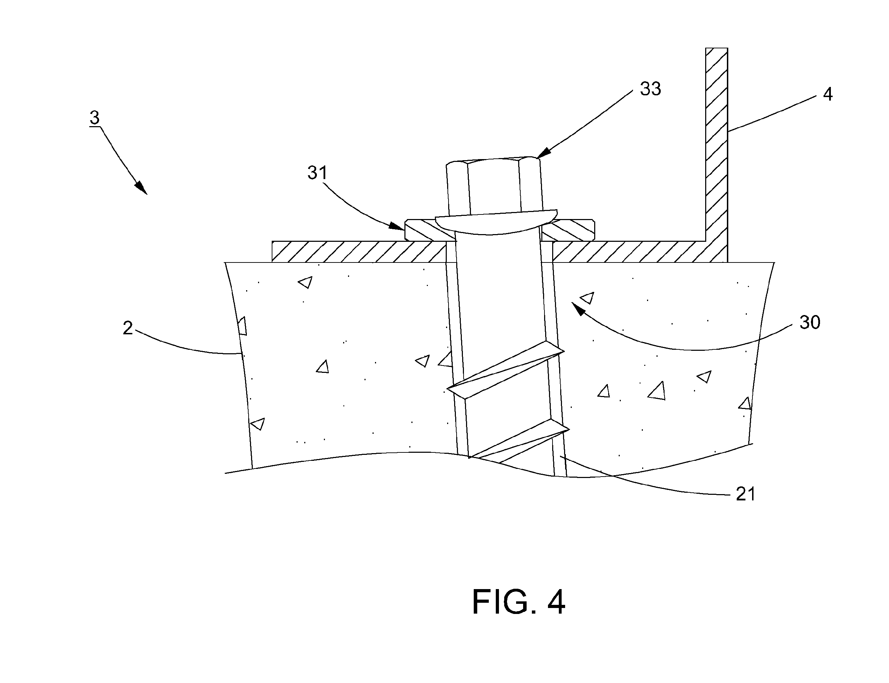

Figs. **3** and **4** show a first preferred embodiment of the present invention. A concrete bole assembly **3** is utilized to fasten an object **4** to a building material **2,** such as concrete. The concrete bolt assembly **3** comprises a bolt set **30** and a spherical washer **31** for the bolt set **30** to penetrate. Wherein, the bolt set **30** includes a concrete bolt member **32** and a spherical nut **33** disposed on the concrete bolt member **32.** The concrete bolt member **32** has a shank **321,** and a first threaded section **322** disposed on the shank **321,** opposite to the spherical nut **33.** The spherical nut **33** has a hexagonal head portion **332** formed with respect to a central axis **331,** a first top plane **333** formed on the head portion **332,** and a first bottom plane **334** formed opposite to the first top plane **333.** The first bottom plane **334** is formed into a first sphere **334A,** and a center of the first sphere **334A** is situated on the central axis **331.** Further, the spherical washer **31** is disposed on the bolt set **30.** The spherical washer **31** has a washer body **311,** a second top plane **312** formed on the washer body **311,** and a second bottom plane **313** disposed opposite to the second top plane **312.** Wherein, an opening **314** is defined in accordance with the central axis **331** on the washer body **311** for the shank **321** of the concrete bolt member **32** to penetrate. Moreover, a second sphere **312A,** corresponding to the first sphere **334A,** is formed on the second top plane **312,** and a center of the second sphere **312A** is also situated on the central axis **331.**

Accompanying with Fig. **4****,** in using, the object **4** is to be fixed to the building material **2** (such as concrete). Firstly, a predrilled hole **21** is formed at a proper position of the concrete **2.** Afterward, when the bolt set **30** penetrates the spherical washer **31,** a wrench is further exerted to screw the concrete bolt assembly **3.** After the spherical nut **33** touches the spherical washer **31,** the bolt set **30** starts to be firmly engaged in the predrilled hole **21.** Accordingly, the object **4** is fixed to the concrete **2.**

Herein, since the spherical washer **31** and the spherical nut **33** respectively have the first sphere **334A** and the second sphere **312A,** the spherical washer **31** and the spherical nut **33** can firmly contact each other even the bolt set **30** is fastened in an inclined angle. Preferably, there is no interstice incurred between the spherical nut **33** and the spherical washer **31** or between the spherical washer **31** and the object **4;** namely, the room among the spherical nut **33,** the spherical washer **31,** and the object **4** is completely closed as figured. As a result, foreign substances and moisture are prevented from getting into the bolt set **30** and the predrilled hole **21,** so that the concrete bolt assembly **3** will not be corroded. In fact, since the centers of the first sphere **334A** and the second sphere **312A** are situated on the same central axis **331,** a perpendicular engaging force is resulted along the central axis **331** for firmly constraining the concrete bolt member **32** while the spherical washer **31** and the spherical nut **33** contact each other in time of screwing. Whereby, the perpendicular engaging force allows a more stable fastening effect of the concrete bolt assembly **1** to be achieved. Favorably, even the concrete bolt member **32** enters the concrete **2** along the inclined angle, the stable and firmly engaging force avoids breaking the concrete **2.** Concurrently, the fastened concrete bolt assembly **3** will not be withdrawn by any accidental external vibration; obviously, the fastening effect of the present invention is largely enhanced.

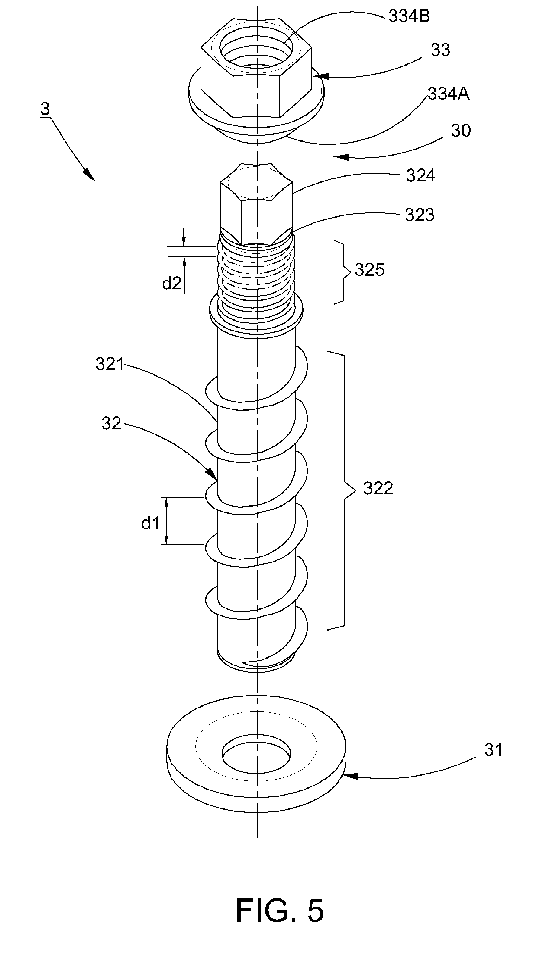

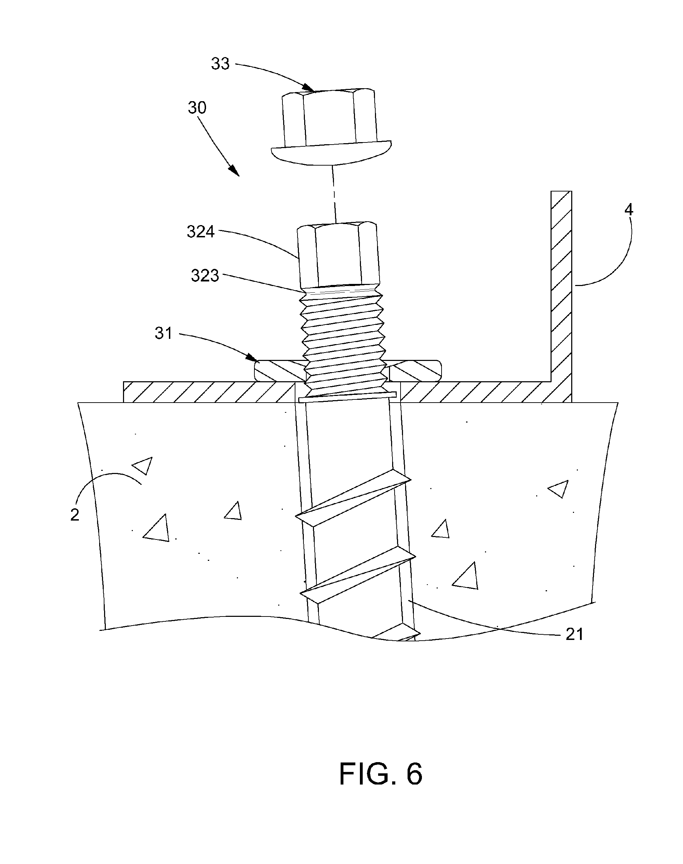

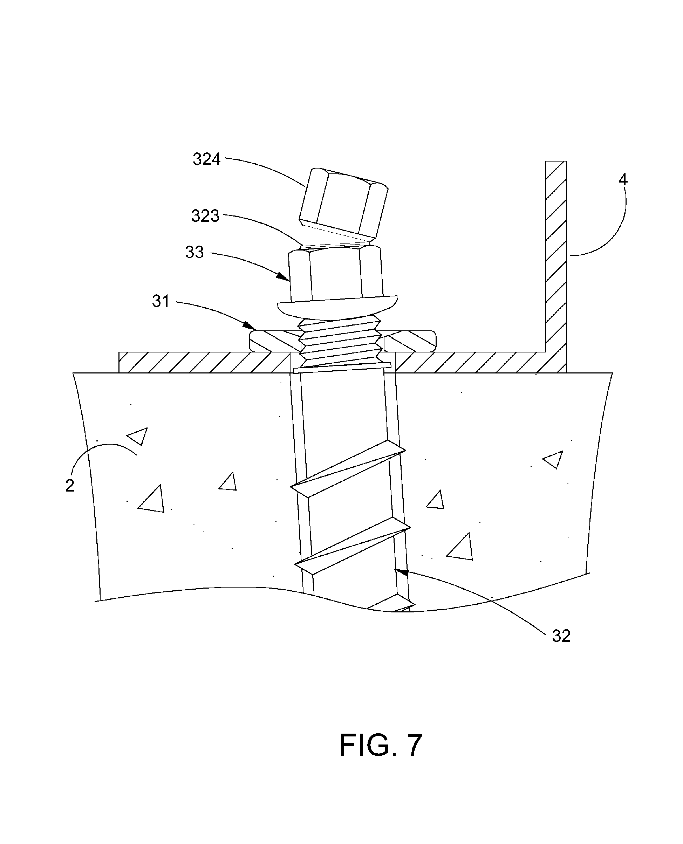

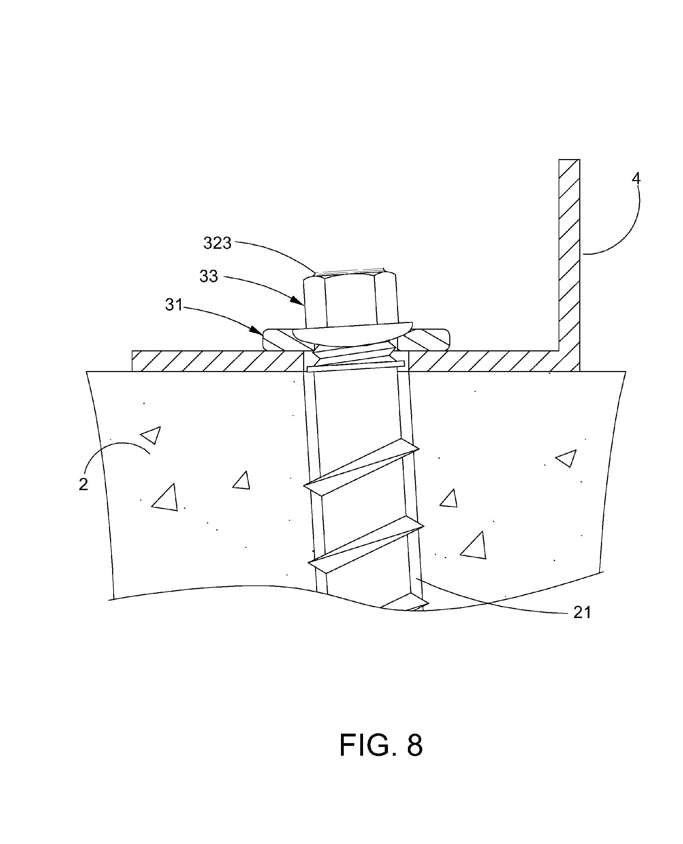

Referring to Fig. **5****,** a second preferred embodiment of the present invention is shown. The concrete bolt assembly **3** similarly comprises the bolt set **30** and the spherical washer **31** as that of the previous embodiment. Differently, the concrete bolt member **30** and the spherical nut **33** are separated in this embodiment. On the shank **321** of the concrete bole member **32,** a neck **323** is formed opposite to the first threaded section **322,** a polygonal section **324** is disposed above the neck **323,** and a second threaded section **325** is surrounded between the first threaded section **322** and the neck **323.** Further, the spherical nut **33** defines a threaded hole **334B** around the center of the first sphere **334A** for coupling to the second threaded section **325.** In this embodiment, the polygonal section **324** is directed to a hexagonal section that is commonly seen in practice. Moreover, a pitch **d1** of the first threaded section **322** is larger than a pitch **d2** of the second threaded section **325.** Accompanying with Figs. **6** to **8****,** a wrench (not shown) is utilized to rotate the polygonal (hexagonal) section **324** on the shank **321** so as to bring the first threaded section **322** getting into the predrilled hole **21.** When the bolt set **30** is engaged properly, the polygonal (hexagonal) section **324** is snapped from the neck **323** (as shown in Fig. **7****).** In the meantime, the fastening of the concrete bolt assembly **3** is not completed yet. In order to complete the fastening of the concrete bolt assembly **3,** the wrench further rotates the spherical nut **33,** so that the spherical nut **33** is able to move toward the spherical washer **31** until they are both stopped by the object **4.** Accordingly, the concrete bolt member **32** is now firmly engaged in the predrilled hole **21,** and the object **4** is tightly and stably locked onto the concrete **2.**

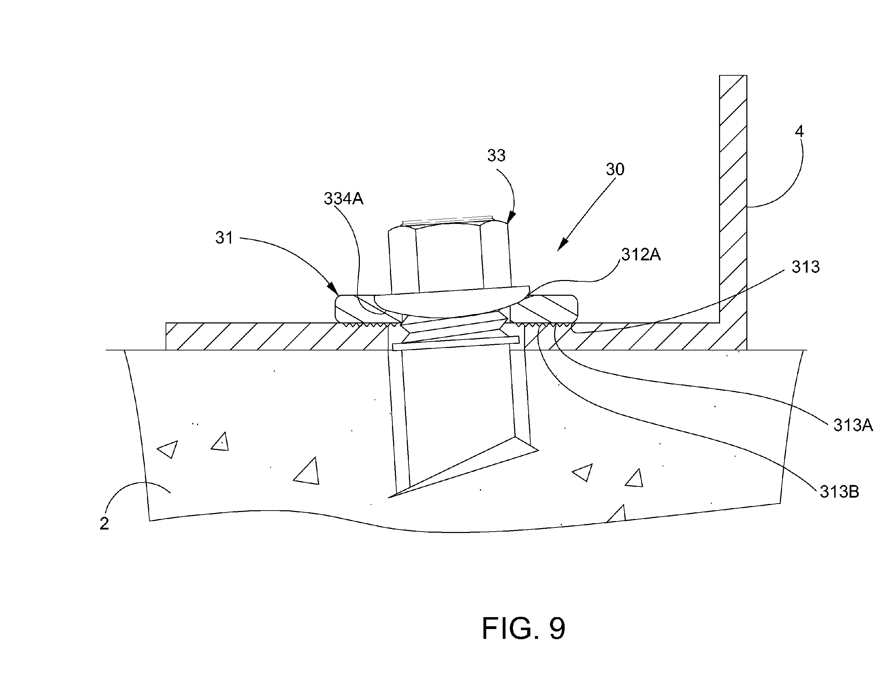

Referring to Fig. **9****,** a third preferred embodiment of the present invention is shown. The concrete bolt assembly **3** similarly comprises the concrete bolt member **32** and the spherical washer **31** as that of the previous embodiment. Differently, a plurality of slots **313A** are defined on the second bottom plane **313** of the spherical washer **31,** so that a periphery of the second bottom plane **313** is indented by forming a plurality of teeth units **313B** thereon. Concurrently, a radian of the first sphere **334A** of the spherical nut **33** and a radian of the second sphere **312A** of the spherical washer **31** are different. Accordingly, the teeth units **313B** of the spherical washer **31** increase resistance between the spherical washer **31** and the object **4,** so that the concrete bolt assembly **3** is able to be more tightly engaged after screwed. Moreover, the different radians of the spherical washer **31** and the spherical nut **33** also augment friction therebetween, so that the spherical washer **31** and the spherical nut **3**3 can be more tightly clenched after screwed. Thereby, the concrete bolt assembly **3** does not easily come off the concrete **2.**

To sum up, the present invention takes advantage of the first sphere of the spherical nut and the second sphere of the spherical washer to increase a contacting area therebetween. Namely, the spherical washer and the spherical nut can be tightly engaged in a perpendicular way even the concrete bolt assembly is fastened into the concrete by means of any inclined screwing angle. Accordingly, there is no interstice occurred after the spherical washer and the spherical nut assist the concrete bolt member in fastening. Therefore, the concrete bolt assembly can tightly and stably stay in the concrete, and the structure or the strength of the concrete will not be destroyed. Preferably, the embedded concrete bolt assembly will not be removed easily since it is prevented from external influence.

While we have shown and described the embodiment in accordance with the present invention, it should be clear to those skilled in the art that further embodiments may be made without departing from the scope of the present invention.

## Claims

1. A concrete bolt assembly (3) comprising:
a bolt set (30) including a concrete bolt member (32) and a spherical nut (33) disposed on said concrete bolt member (32); wherein, said concrete bolt member (32) having a shank (321), and a first threaded section (322) disposed on said shank (321), opposite to said spherical nut (33) ; said spherical nut (33) having a head portion (332) formed with respect to a central axis (331), a first top plane (333) formed on said head portion (332), and a first bottom plane (334) formed opposite to said first top plane (333); said first bottom plane (334) being formed into a first sphere (334A) configuration, and a center of said first sphere (334A) being situated on said central axis (331); and
a spherical washer (31) disposed on said bolt set (30); said spherical washer (31) having a washer body (311), a second top plane (312) formed on said washer body (311), and a second bottom plane (313) disposed opposite to said second top plane (312); wherein, an opening (314) being defined on said washer body (311) for said shank (321) of said concrete bolt member (32) to penetrate; a second sphere (312A), corresponding to said first sphere (334A), being formed on said second top plane (312), and a center of said second sphere (312A) being situated on said central axis (331).

2. The concrete bolt assembly (3) as claimed in Claim 1, wherein, said concrete bolt member (32) and said spherical nut (33) are separated; on said shank (321) of said concrete bole member (32), a neck (323) is formed opposite to said first threaded section (322), a polygonal section (324) is disposed above said neck (323), and a second threaded section (325) is surrounded between said first threaded section (322) and said neck (323); said spherical nut (33) defines a threaded hole (334B) around said center of said first sphere (334A) for coupling to said second threaded section (325).

3. The concrete bolt assembly (3) as claimed in Claim 2, wherein, said polygonal section (324) is a hexagonal section.

4. The concrete bolt assembly (3) as claimed in Claim 2 or 3, wherein, a pitch (d1) of said first threaded section (322) is larger than a pitch (d2) of said second threaded section (325).

5. The concrete bolt assembly (3) as claimed in claim 4, wherein, a plurality of slots (313A) are defined on said second bottom plane (313) of said spherical washer (31), so that a periphery of said second bottom plane (313) is indented by forming a plurality of teeth units (313B) thereon.

6. The concrete bolt assembly (3) as claimed in Claim 4, wherein, a radian of said first sphere (334A) of said spherical nut (33) and a radian of said second sphere (312A) of said spherical washer (31) are different.
